# EUROPÄISCHE PATENTSCHRIFT

(11) **EP 2 647 068 B1**
(45) Veröffentlichungstag und Bekanntmachung des Hinweises auf die Patenterteilung: **24.04.2019**
(21) Anmeldenummer: 11788072.4
(22) Anmeldetag: 25.11.2011
(51) Int. Cl.: H01M 2/26, H01M 4/04, H01M 4/70, H01M 10/04, H01M 10/0585, H01M 10/052

(54) **BATTERIEELEKTRODE UND VERFAHREN ZUM HERSTELLEN DERSELBEN**
BATTERY ELECTRODE AND A METHOD FOR PRODUCING SAME
ÉLECTRODE DE BATTERIE ET PROCÉDÉ DE FABRICATION CORRESPONDANT

(30) Priorität: 29.11.2010 DE 102010062143
(43) Veröffentlichungstag der Anmeldung: 09.10.2013
(73) Patentinhaber: Zentrum für Sonnenenergie- und Wasserstoff-Forschung Baden-Württemberg, 70565 Stuttgart (DE)
(72) Erfinder: STERN, Rainer, 89073 Ulm (DE); KASPER, Michael, 89257 Illertissen (DE)
(74) Vertreter: Ter Meer Steinmeister & Partner
(86) Internationale Anmeldenummer: PCT/EP2011/005946
(87) Internationale Veröffentlichungsnummer: WO 2012/072222

(56) Entgegenhaltungen:
- EP-A1- 0 766 327
- EP-A1- 1 359 633
- EP-A1- 1 596 459
- EP-A2- 0 825 659
- EP-A2- 1 403 943
- WO-A1-2011/060982
- WO-A2-2005/036689
- DE-A1- 10 341 355
- DE-A1-102008 041 713
- JP-A- 2000 243 376
- JP-A- 2001 043 848

## Beschreibung

### Technisches Gebiet

Die Erfindung betrifft eine Batterieelektrode und ein Verfahren zum Herstellen derselben.

### Hintergrund der Erfindung

Im Allgemeinen bezeichnet eine Batterie sowohl nicht-wiederaufladbare Primärzellen als auch wiederaufladbare Sekundärzellen (auch Akku genannt). Batterien werden anhand der zugrundeliegenden chemischen Redoxreaktion, der eingesetzten Materialien, der elektrischen Werte (z.B. Spannung oder Kapazität) oder der geometrischen oder konstruktiven Bauform eingeteilt. Beispielsweise gibt es Alkali-Mangan-Batterien, Zink-Kohle-Batterien oder Lithiumbatterien. Entsprechend ihrem inneren Aufbau werden bei Batterien des Weiteren Wickelzellen und Stapelbatterien unterschieden. Bei einer Wickelzelle werden die übereinander angeordneten Elektroden- und Separatorschichten spiralförmig aufgewickelt und beispielsweise in eine Rundbatterie mit zylindrischem Gehäuse eingebaut. Bei einer Stapelbatterie hingegen werden mehrere Elektroden- und Separatorschichten abwechselnd übereinander gestapelt.

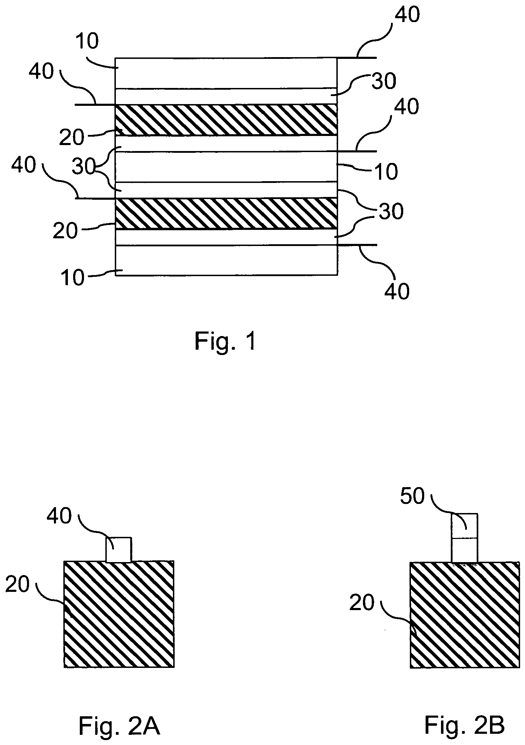

In Fig. 1 ist beispielhaft eine Stapelbatterie gezeigt. Wie in Fig. 1 gezeigt, ist in der Batterie abwechselnd eine Anode 10 und eine Kathode 20 angeordnet, wobei jeweils zwischen der Anode 10 und der Kathode 20 ein Separator 30 angeordnet ist, um die beiden Elektroden räumlich und elektrisch zu trennen. Der Separator 30 muss jedoch für Ionen durchlässig sein, die die Umwandlung der gespeicherten chemischen Energie in elektrische Energie bewirken. Meistens werden für Separatoren 30 mikroporöse Kunststoffe oder Vliese aus Glasfaser oder Polyethylen verwendet. Die Anoden 10 sind in ihren Ableiterbereichen 40 miteinander verbunden ebenso wie die Kathoden 20, sodass alle gleichnamigen Elektroden in einer Batterie zusammengeschaltet sind. In den Ableiterbereichen 40 ist jeweils eine Anschlussfahne 50 (siehe Fig. 2B) für die Kathoden 20 und die Anoden 10 befestigt, die mit einem entsprechenden äußeren Spannungspol der Batterie verbunden wird.

Fig. 2A zeigt eine Draufsicht auf eine Kathode 20 mit einem Ableiterbereich 40. In den Ableiterbereichen 40 der übereinander angeordneten Kathoden 20 werden die Kathoden 20 miteinander verbunden. Wie in Fig. 2B gezeigt, wird die Anschlussfahne 50 an den miteinander verbundenen Ableiterbereichen 40 befestigt, die nach dem Zusammensetzen der Batterie mit dem Minus-Pol der Batterie in Kontakt steht.

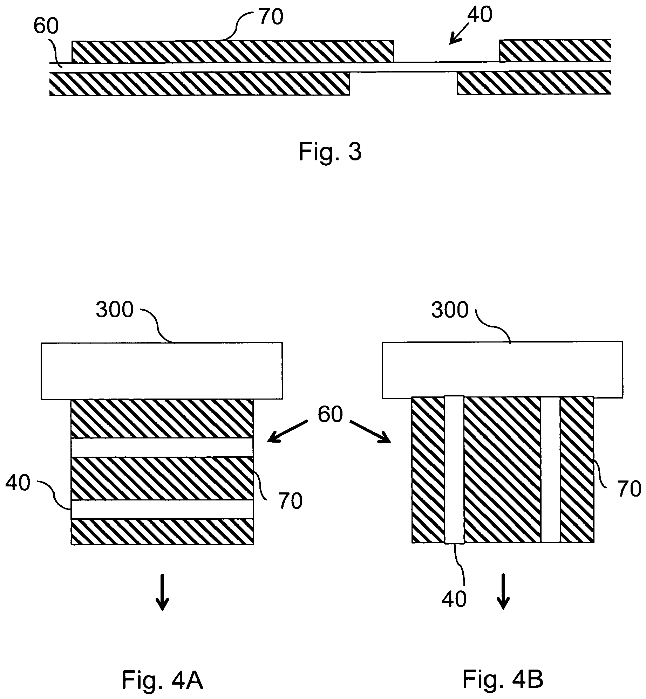

Üblicherweise werden Batterieelektroden als Bulk- oder Rollenmaterial vorgefertigt, aus dem bei der Herstellung einer Batterie eine gewünschte Elektrodenform ausgeschnitten wird. Wie in Fig. 3 gezeigt, umfasst das Elektrodenmaterial ein Kollektorsubstrat 60, das mit einem Beschichtungsfilm 70 versehen ist. Dabei weist das Elektrodenmaterial ein oder mehrere unbeschichtete Ableiterbereiche 40 auf, die später im zusammengesetzten Zustand erforderlich sind, um Spannung bzw. Strom nach Außen abzuführen. An den Ableiterbereichen 40 werden mehrere gleichnamige Elektroden miteinander verbunden und eine metallische Anschlussfahne 50 befestigt. Wenn das Kollektorsubstrat 60 beidseitig beschichtet ist, sind deshalb auch auf beiden Seiten Ableiterbereiche 40 ausgebildet. Hierbei müssen die Ableiterbereiche nicht unbedingt gegenüberliegend ausgebildet sein, sondern können gegeneinander versetzt sein, wie in Fig. 3 gezeigt.

In Figuren 4A und 4B sind Verfahren zum Herstellen eines Elektrodenmaterials mittels eines Schlitzdüsensystems 300 gezeigt. Auf dem bandförmigen Kollektorsubstrat 60 wird ein tintenartiger Beschichtungsfilm 70 aufgetragen. Dies kann entweder durch diskontinuierliche, intermittierende Beschichtung, wobei wie in Fig. 4A gezeigt durch regelmäßiges Unterbrechen der Beschichtung ein unbeschichteter Ableiterbereich 40 ausgebildet wird, oder durch kontinuierliche Beschichtung erfolgen, wie in Fig. 4B gezeigt. Allerdings ist das Ausbilden von komplexeren Ableiterbereichen mit diesen Verfahren sehr aufwändig. Deshalb werden gelegentlich Maskierungsschritte eingesetzt. Alternativ können Ableiterbereiche 40 durch Bürsten oder ähnliche Verfahren auf einem Kollektorsubstrat 60 freigelegt werden.

Nach der Beschichtung wird das Elektrodenmaterial kalandriert, um den Beschichtungsfilm zu verdichten und Hohlräume zu beseitigen, die beim Trocknen des Beschichtungsfilms 70 entstehen. Das fertige Elektrodenmaterial kann dann aufgerollt und bis zur Weiterverarbeitung gelagert werden. Für das Herstellen einer Batterie wird aus dem Elektrodenmaterial eine gewünschte Form ausgeschnitten oder ausgestanzt, die je nach Batterietyp oder Batterieform unterschiedlich ist. Beim Ausschneiden der Batterieelektrode ist zudem zu beachten, dass ein Ableiterbereich 40 vorhanden sein muss. Ein Beispiel für eine rechteckige Elektrodenform mit Ableiterbereich 40 ist in Fig. 2A gezeigt.

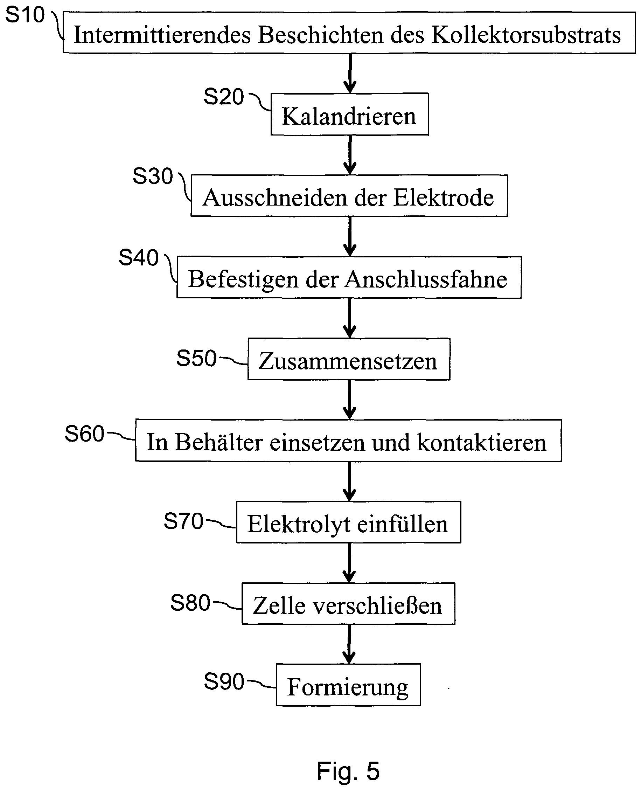

In Fig. 5 ist ein Ablaufdiagramm gezeigt, anhand dessen der Herstellungsprozess einer Batterie, beispielsweise einer Wickelzelle oder einer Stapelbatterie, veranschaulicht wird. Zuerst wird das Kollektorsubstrat 60 mit dem Beschichtungsfilm 70 beispielsweise in einem intermittierenden Verfahren beschichtet (S10), wobei durch Unterbrechung oder Aussetzen beim Auftragen der tintenartigen Beschichtung mehrere unbeschichtete Ableiterbereiche 40 ausgebildet werden. Anschließend wird das Elektrodenmaterial kalandriert (S20). Aus dem Elektrodenmaterial kann dann eine gewünschte Elektrodenform ausgeschnitten oder ausgestanzt werden (S30), wobei die ausgestanzte Form einen Ableiterbereich 40 aufweisen muss. Diese Schritte erfolgen sowohl beim Herstellen der Anode 10 als auch beim Herstellen der Kathode 20. Als nächstes werden die ausgeschnittenen Elektroden so übereinander angeordnet (S40), dass abwechselnd eine Anode 10 und eine Kathode 20 mit einem Separator 30 dazwischen aufeinanderfolgen (siehe Fig. 1). Hierbei werden die Ableiterbereiche 40 der Kathoden 20 und die Ableiterbereiche 40 der Anoden 10 jeweils übereinander angeordnet und miteinander verbunden. Anschließend wird eine Anschlussfahne 50 daran befestigt (S50). Die Anzahl der übereinander angeordneten Anoden 10 und Kathoden 20 kann dabei je nach Art und Eigenschaft der Batterie variieren. Nach Fertigstellen der Elektrodenanordnung wird die Elektrodenanordnung in ein Gehäuse eingesetzt und die Anschlussfahnen 50 werden mit den äußeren Spannungspolen des Gehäuses verbunden (S60). Bei einer Wickelzelle wird die Elektrodenanordnung ferner spiralförmig aufgewickelt und so in das Gehäuse eingesetzt. Nach Einfüllen des Elektrolyts (S70) wird die Zelle dann verschlossen (S80) und abschließend formiert (S90).

Bei den herkömmlichen Verfahren zum Herstellen von Batterieelektroden bestehen allerdings folgende Probleme. So ist das Herstellen von unbeschichteten Ableiterbereichen durch Maskierungsschritte oder Abbürsten der Beschichtung sehr aufwändig und teuer. Bei dem alternativen Herstellungsverfahren durch intermittierende oder kontinuierliche Beschichtung mit Hilfe eines Schlitzdüsensystems hingegen sind die möglichen Formen und Anordnungen der Ableiterbereiche auf dem Elektrodenmaterial stark eingeschränkt. Angesichts der vielfältigen Einsatzgebiete von Batterien insbesondere in Design-Produkten wie beispielsweise in Mobiltelefonen, Laptops oder Autos wird allerdings eine Flexibilität bei der Gestaltung der Batterieelektroden immer stärker gefordert. Hierbei stellt der Trend zu kleineren Geräten eine besondere Herausforderung an die Batterieherstellung dar. Zum einen müssen daher Batterien mit kleineren Abmessungen entwickelt werden, zum anderen sind häufig komplexe Formen gefordert, um den Innenraum eines Geräts möglichst effizient zu nutzen. Darüber hinaus ist es bei einem intermittierenden Beschichtungsverfahren schwierig, regelmäßige und saubere Randbereiche zwischen Beschichtungsbereich und Ableiterbereich herzustellen.

Darüber hinaus ist es mit den herkömmlichen Verfahren schwierig und teuer, eine Formenvielfalt der Elektroden zu realisieren. Aus Kostengründen wird üblicherweise ein Rollenmaterial als Elektrodenmaterial verwendet, bei dem mögliche Positionen des unbeschichteten Ableiterbereichs 40 bezüglich des Beschichtungsfilms 70 fest definiert sind. Dadurch ist allerdings die Designfreiheit für die Elektrodenform stark eingeschränkt, weil jede Elektrode einen Ableiterbereich 40 aufweisen muss. Außerdem entsteht beim Ausschneiden der gewünschten Elektrodenform mitsamt des Ableiterbereichs 40 viel überschüssiges Elektrodenmaterial, das verworfen werden muss. Wenn beispielsweise kleine Elektroden so ausgeschnitten werden, dass sie einen Ableiterbereich 40 enthalten, können bei einem großen Abstand zwischen aufeinanderfolgenden Ableiterbereichen 40 Bereiche des dazwischen liegenden beschichteten Substrats nicht mehr verwendet werden. Dadurch wird der Materialverbrauch erhöht und das Herstellungsverfahren verteuert. Des Weiteren muss für jede gewünschte Elektrodenform eine eigene Stanzform zum Ausstanzen der gewünschten Form angeschafft werden. Aufgrund der hohen Anforderungen an eine Schneidgüte sind diese Stanzformen jedoch sehr teuer.

In den herkömmlichen Herstellungsverfahren wird der Ableiterbereich 40 von einem beschichteten Elektrodenbereich vorstehend ausgebildet, um daran die Anschlussfahne 50 zu befestigen und gleichnamige Elektroden miteinander zu verbinden. Dies führt jedoch zu ungenutztem Raum in der Batterie, der nicht durch aktives Elektrodenmaterial gefüllt ist. Dadurch wird die Größe der Batterie unnötig erhöht bzw. eine äußere Form der Batterie festgelegt.

Des Weiteren können die Ableiterbereiche 40 in den herkömmlichen Herstellungsverfahren oder auch während des Lagems leicht verunreinigt werden. Insbesondere bei einem Kalandrierprozess können Verunreinigungen auf die Ableiterbereiche 40 gelangen. Dies verschlechtert die Qualität eines elektrischen Kontakts zwischen gleichnamigen Elektroden untereinander und zwischen den Elektroden und einer dazugehörigen Anschlussfahne 50. Da beim Herstellen des Elektrodenmaterials zudem die Ableiterbereiche 40 vor dem Kalandrierprozess ausgebildet werden, ist das Kalandrieren aufgrund der ungleichmäßig dicken Struktur erschwert. Außerdem kann der durch herkömmliche Verfahren ausgebildete Ableiterbereich 40 schlecht definiert sein, wobei besonders ein Randbereich des Ableiterbereichs 40 ungenau und ungleichmäßig ausgebildet sein kann.

EP 1 596 459 A1 beschreibt ein elektrochemisches Gerät und ein Verfahren zur Herstellung. Ein Kunststoffsubstrat wird beidseitig mit einem Metall beschichtet, welches dann entfernt wird.

EP 0 825 659 A2 beschreibt eine Elektrode für eine Sekundärbatterie mit einem nicht wässrigen Elektrolyt und einem Verfahren zur Herstellung. Auf dem Kollektorsubstrat wird ein Aktivmaterial aufgebracht, welches getrocknet wird, um eine aktive Schicht zu bilden. Vorbestimmte Bereiche des Aktivmaterials werden dann mit einer Flüssigkeit imprägniert, wobei nach Aushärtung der Flüssigkeit innerhalb des Aktivmaterials der imprägnierte Bereich abgezogen wird, um eine Oberfläche des Kollektors freizulegen.

JP 2000 243376 A beschreibt eine Batterieelektrode, die an einer Seite Ableiterbereiche aufweist, in denen Ableiterfahnen befestigt sind.

JP 2001 043848 beschreibt ein Verfahren zur Herstellung einer Polymerbatterie, bei dem ein poröser Beschichtungsfilm von einem Stromkollektor entfernt wird, indem der Beschichtungsfilm mittels einer Matrize an mehreren bestimmten Bereichen verklebt wird, wobei die verklebten Bereiche dann jeweils aus dem beschichteten Bereich herausgerissen werden, um Ableiterbereiche zu bilden.

### Zusammenfassung der Erfindung

Daher ist es Aufgabe der vorliegenden Erfindung, eine Batterieelektrode und ein Herstellungsverfahren für selbige anzugeben, wobei eine volumetrische Energiedichte einer Batterie durch kompakte Gestaltung der Batterieelektrode bei geringen Herstellungskosten erhöht werden kann.

Die Aufgabe wird durch die Merkmale der unabhängigen Ansprüche gelöst.

Die Erfindung basiert auf dem Gedanken, einen als Ableiterbereich fungierenden unbeschichteten Bereich auf einem Kollektorsubstrat einer Batterieelektrode so anzuordnen, dass er in einen beschichteten Bereich des Kollektorsubstrats hineinragt oder innerhalb des beschichteten Bereichs angeordnet ist. Wenn der unbeschichtete Ableiterbereich in den beschichteten Bereich hineinragt, ist eine gesamte Umfangslänge des beschichteten Bereichs größer als bei einer Batterieelektroden mit vorstehendem Ableiterbereich. Zugleich ist ein außen liegender Rand des unbeschichteten Bereichs, d.h. ein an eine Kante der Batterieelektrode angrenzender Rand, minimiert. Auf diese Weise kann ein ungenützter Raum in einer Batterie, der durch einen von der Batterieelektrode vorstehenden Ableiterbereich verursacht wird, vermieden und eine Energiedichte bei gleichbleibendem Batterievolumen erhöht werden.

Gemäß einem Aspekt der vorliegenden Erfindung wird eine Batterieelektrode angegeben, die ein Kollektorsubstrat, einen auf dem Kollektorsubstrat ausgebildeten Beschichtungsfilm und einen Ableiterbereich umfasst, wobei der Ableiterbereich zu einem Großteil vom Beschichtungsfilm umgeben ist. Der Ableiterbereich kann einen Umfangsbereich aufweisen, der mit einem äußeren Rand der Batterieelektrode zusammenfällt, wobei der Ableiterbereich allerdings überwiegend an den aktiven vom Beschichtungsfilm bedeckten Bereich der Batterieelektrode angrenzt, d.h. der Ableiterbereich ist wenigstens in seinem halben Außenumfang vom Beschichtungsfilm umgeben. Alternativ kann der Ableiterbereich jedoch auch vollständig im beschichteten Bereich des Kollektorsubstrats liegen, sodass der Ableiterbereich an seinem gesamten Umfang an den Beschichtungsfilm angrenzt. Auf diese Weise kann beim Zusammensetzen der Batterie ein inaktiver Bereich bzw. Totvolumen reduziert werden, sodass bei gleicher Batteriegröße eine Kapazität und eine volumetrische Energiedichte erhöht wird.

In einem Ausführungsbeispiel ist der Ableiterbereich auf der Batterieelektrode in einer beliebigen Form ausgebildet, beispielsweise im Wesentlichen kreisförmig, ringförmig, rechteckig oder dreieckig. Wenn sowohl der Ableiterbereich als auch die Batterieelektrode eine rechteckige Form aufweisen, kann der Ableiterbereich in einer Ecke der Batterieelektrode angeordnet sein, so dass zwei Seiten des Ableiterbereichs an den Beschichtungsfilm angrenzen. Alternativ kann der Ableiterbereich nur mit einer Seite an den äußeren Rand der Batterieelektrode angrenzen, so dass drei Seiten des Ableiterbereichs von dem beschichteten Bereich der Batterieelektrode umgeben sind.

Vorzugsweise ist der Beschichtungsfilm auf beiden Seiten des Kollektorsubstrats ausgebildet, um eine aktive Fläche der Batterieelektrode zu erhöhen. In diesem Fall kann jeweils mindestens ein Ableiterbereich auf beiden Seiten des Kollektorsubstrats ausgebildet sein. Wenn Ableiterbereiche auf beiden Seiten des Kollektorsubstrats ausgebildet sind, liegen sich jeweils zwei Ableiterbereiche vorzugsweise gegenüber, so dass gleichnamige Batterieelektroden am Ableiterbereich beispielsweise durch einen Schweißkontakt leicht miteinander verbunden werden können. Alternativ können die Ableiterbereiche gegeneinander versetzt auf beiden Seiten des Kollektorsubstrats angeordnet sein.

In einem bevorzugten Ausführungsbeispiel wird der Ableiterbereich durch Laserablation des Beschichtungsfilms hergestellt, sodass das darunterliegende Kollektorsubstrat freigelegt wird. Auf diese Weise kann der Beschichtungsfilm großflächig oder im Wesentlichen vollständig und kontinuierlich auf dem Kollektorsubstrat hergestellt werden, ohne einen Ableiterbereich aussparen zu müssen. Zudem kann der Beschichtungsfilm auf einer oder auf beiden Seiten des Kollektorsubstrats großflächig ausgebildet sein, so dass das beschichtete Substrat eine gleichmäßige Dicke aufweist. Wegen der gleichmäßigen Dicke des beschichteten Kollektorsubstrats ist darüber hinaus ein Kalandrierprozess vereinfacht und kann mit besserer Qualität durchgeführt werden. Darüber hinaus kann das Ausbilden des Ableiterbereichs dann unmittelbar vor Kontaktieren des Ableiterbereichs erfolgen, so dass eine frische und saubere Oberfläche für die Kontaktierung zur Verfügung steht. Daher kann das Auftreten von Verunreinigungen vermieden werden, die eine ernsthafte Gefahr für eine fertige Batterie darstellen und Dendritenbildung mit daraus resultierendem Kurzschluss verursachen können, wie beispielsweise beim Bürsten entstehende Schleifpartikel oder Beschichtungsreste. Durch die Verwendung eines Lasers zum Freilegen der Ableiterbereiche können die Ableiterbereiche außerdem in beliebiger Form und an jeder beliebigen Stelle mit sauberen und gleichmäßigen Kanten auf dem beschichteten Kollektorsubstrat hergestellt werden. Dadurch besteht absolute Designfreiheit und die Möglichkeit, flächenoptimierte Ableiterstrukturen herzustellen. Die äußere Form der Batterieelektrode kann ebenfalls mit einem Laser ausgeschnitten werden. Dies erspart ein weiteres Werkzeug bzw. einen weiteren Arbeitsschritt und insbesondere teure Stanzformen. Dadurch wird es möglich, beliebige Elektrodenformen schon bei geringen Stückzahlen kostengünstig herzustellen. Somit können mit einem einzigen Laser zwei verschiedene Arbeitsschritte mit erheblicher Zeitersparnis durchgeführt werden, wodurch auch ein Umsetzen des zu bearbeitenden Elektrodenmaterials oder des Werkzeugs entfällt.

Des Weiteren kann mindestens eine Aussparung in der Batterieelektrode ausgebildet sein. Vorzugsweise entspricht die Aussparung einer Elektrode einem auf einer gegennamigen Elektrode ausgebildeten Ableiterbereich, damit die übereinander angeordneten Ableiterbereiche der gleichnamigen Elektroden bei einer alternierenden Elektrodenanordnung durch die anderen Elektroden hindurch miteinander verbunden werden können. Dies kann beispielsweise vorteilhaft sein, wenn der Ableiterbereich einer Elektrode in einen beschichteten Elektrodenbereich hineinragt oder von diesem vollständig umgeben ist. Wenn die Batterieelektrode mittels Laserschneiden ausgeschnitten wird, kann das Ausschneiden der mindestens einen Aussparung ebenfalls mit Hilfe des Lasers erfolgen, um einen Verfahrensablauf zu optimieren.

Für den Materialabtrag mittels Laserablation bzw. für das Laserschneiden kann jedes geeignete Lasersystem verwendet werden, z.B. Schneid- oder Gravurlasersysteme. Aufgrund der hohen Kantenqualität und Schnittpräzision bezüglich Schnittführung und Eindringtiefe können Ableiterbereiche von hoher Qualität hergestellt werden. Durch die Verwendung von ultrakurzen Laserpulsen kann darüber hinaus der Energieeintrag reduziert werden, sodass eine thermische Belastung des Elektrodenmaterials gering gehalten wird. Da geeignete Lasersysteme vergleichbar teuer wie Schlitzdüsensysteme sind, entstehen keine hohen Anschaffungskosten.

In einem weiteren Aspekt der vorliegenden Erfindung wird eine Batterie angegeben, die mindestens eine Batterieelektrode nach einem der obigen Ausführungsbeispiele enthält. Da die Batterieelektrode durch Ausbilden eines Ableiterbereichs, der überwiegend von einem Beschichtungsfilm umgeben ist, kompakter gestaltet werden kann und somit einen geringeren Platzbedarf aufweist, kann eine volumetrische Energiedichte der Batterie erhöht werden.

In einem weiteren Aspekt der vorliegenden Erfindung wird ein Verfahren zum Herstellen einer Batterieelektrode angegeben, wobei auf einem Kollektorsubstrat ein Beschichtungsfilm aufgetragen wird. In einem Ableiterbereich wird anschließend der Beschichtungsfilm so entfernt, dass ein Umfang des Ableiterbereichs überwiegend bzw. wenigstens zur Hälfte vom Beschichtungsfilm umgeben ist. Da der Ableiterbereich durch Abtragen des Beschichtungsfilms ausgebildet wird, kann das im Wesentlichen vollständig beschichtete Kollektorsubstrat als Elektrodenmaterial ohne besondere Vorkehrungen gelagert werden und die Ausbildung des Ableiterbereichs erst unmittelbar vor einer Kontaktierung des Ableiterbereichs erfolgen. Auf diese Weise werden Verunreinigungen und chemische Veränderungen der Oberfläche vermieden und ein Kontaktwiderstand im Ableiterbereich reduziert. Des Weiteren kann bei diesem Verfahren der Beschichtungsfilm auf einer gesamten Oberfläche des Kollektorsubstrats großflächig und/oder nahezu vollständig ausgebildet werden. Möglicherweise wird der Beschichtungsfilm auch auf beiden Seiten des Kollektorsubstrats ausgebildet. Vorteilhafterweise werden kontinuierliche Beschichtungstechnologien, wie beispielsweise Doctor-blade, Comma-bar und Kiss-Coating verwendet, so dass die Herstellungskosten reduziert werden können. Darüber hinaus weist das beschichtete Kollektorsubstrat eine gleichmäßige Dicke auf, wodurch ein Kalandrierprozess vereinfacht und verbessert wird.

In einem bevorzugten Ausführungsbeispiel wird der Beschichtungsfilm im Ableiterbereich mit einem Laser entfernt. Dabei kann in einem bevorzugten Ausführungsbeispiel gleichzeitig eine dünne Schicht des Kollektorsubstrats im Ableiterbereich abgetragen werden, um eine Oberflächenbeschaffenheit im Ableiterbereich zu verbessern. Durch Verwendung der Laserablation zum Ausbilden des Ableiterbereichs wird eine Designfreiheit in der Gestaltung der Batterieelektrode und des Ableiterbereichs erhöht und individuelle Anfertigungen ermöglicht.

### Kurze Beschreibung der Figuren

In den Figuren zeigen
Fig. 1 eine schematische Schnittansicht einer Elektrodenanordnung in einer herkömmlichen Batterie;
Figuren 2A und 2B eine Draufsicht auf eine herkömmliche Batterieelektrode;
Fig. 3 zeigt eine Schnittansicht eines herkömmlichen Elektrodenmaterials;
Figuren 4A und 4B Verfahren zum Herstellen eines herkömmlichen Elektrodenmaterials;
Fig. 5 ein Ablaufdiagramm eines herkömmlichen Herstellungsverfahrens einer Batterie;
Fig. 6 Batterieelektroden gemäß einem ersten Ausführungsbeispiel der vorliegenden Erfindung;
Fig. 7 Batterieelektroden gemäß einem weiteren Ausführungsbeispiel der vorliegenden Erfindung;
Fig. 8 Batterieelektroden gemäß einem anderen Ausführungsbeispiel der vorliegenden Erfindung;
Fig. 9A-9C Schnittansichten durch ein Elektrodenmaterial während eines Herstellungsprozesses gemäß der vorliegenden Erfindung; und
Fig. 10 ein Ablaufdiagramm eines Herstellungsverfahrens gemäß einem Ausführungsbeispiel der vorliegenden Erfindung.

### Ausführliche Beschreibung der Erfindung

Im Folgenden wird die Erfindung anhand des Beispiels der Lithium-Ionen-Batterie beschrieben, die sich durch eine hohe Energiedichte und thermische Stabilität auszeichnet. Die vorliegende Erfindung soll jedoch nicht auf Lithium-Ionen-Batterien beschränkt sein, sondern kann auf jede beliebige Batterie angewendet werden.

Bei einer Lithium-Ionen-Batterie besteht ein Kollektorsubstrat 60 einer Anode 10 beispielsweise aus Kupfer, das mit einem Beschichtungsfilm 70 aus Graphit, Bindemittel, Ruß und Lösungsmittel beschichtet ist. Gemäß der vorliegenden Erfindung wird der Beschichtungsfilm 70 in einem Ableiterbereich 40 entfernt, sodass das Kollektorsubstrat 60 im Ableiterbereich 40 freigelegt ist. Am Ableiterbereich 40 der Anode 10 kann eine Anschlussfahne 50 bspw. aus Nickel befestigt werden. Bei der Kathode 20 besteht ein Kollektorsubstrat 60 beispielsweise aus Aluminium und ist mit einem Beschichtungsfilm 70 aus einem zu einer Redoxreaktion beitragenden Aktivmaterial, Bindemittel, Ruß, Graphit und Lösungsmittel beschichtet. Die Anschlussfahne der Kathode besteht vorzugsweise ebenfalls aus Aluminium.

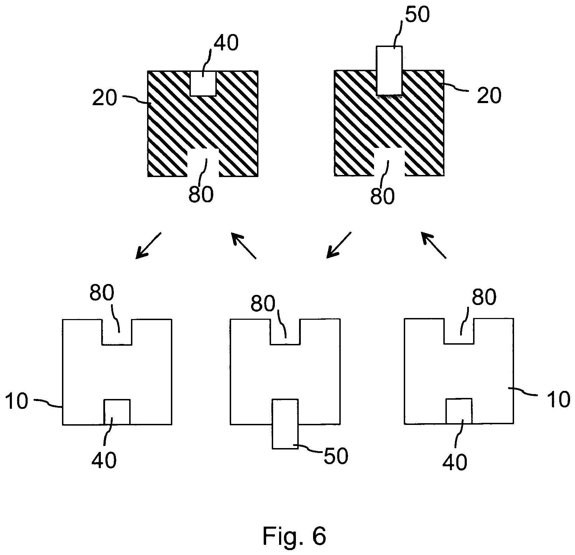

In Fig. 6 sind Batterieelektroden gemäß der vorliegenden Erfindung gezeigt, bei denen ein Ableiterbereich 40 an seinem Umfang überwiegend an den Beschichtungsfilm 70 auf dem Kollektorsubstrat 60 angrenzt. Sowohl die Anoden 10 als auch die Kathoden weisen einen innen liegenden Ableiterbereich 40 und eine Aussparung 80 auf. Die Aussparung 80 ist an einer Stelle ausgebildet, die dem Ableiterbereich 40 der jeweiligen gegennamigen Elektrode im zusammengesetzten Zustand entspricht. Die Aussparungen 80 der Anoden 10 sind folglich so angeordnet, dass sie im zusammengesetzten Zustand der Elektroden über bzw. unter den Ableiterbereichen 40 der Kathoden 10 liegen. Die Pfeile in Fig. 6 deuten eine Elektrodenanordnung im zusammengesetzten Zustand an, wobei jeweils abwechselnd eine Anode 10 und eine Kathode 20 übereinander angeordnet werden. Hierbei ist zwischen den Anoden 10 und Kathoden 20 ein Separator 30 angeordnet (nicht gezeigt), der aus mikroporösen Folien oder Vliesstoffen bestehen kann. In den Ableiterbereichen 40 können vor dem Zusammensetzen der Elektroden Anschlussfahnen 50 jeweils an mindestens einer der Anoden 10 und an mindestens einer der Kathoden 20 befestigt werden. Vorzugsweise werden die Anschlussfahnen 50 jedoch nach dem Zusammensetzen der Elektroden beispielsweise durch Ultraschallschweißen an den Ableiterbereichen 40 befestigt. Da bei diesem Ausführungsbeispiel ein Ableiterbereich 40 einer Elektrode einer Aussparung 80 einer gegennamigen Elektrode gegenüberliegt, können hierbei gleichzeitig jeweils die Anoden 10 bzw. die Kathoden 20 an ihren Ableiterbereichen 40 elektrisch miteinander verbunden werden.

Es ist auch möglich, nur die Kathoden oder nur die Anoden mit einem innen liegenden oder hineinragenden Ableiterbereich auszubilden, wobei die andere der zwei Elektroden nach dem herkömmlichen Verfahren mit vorstehendem Ableiterbereich hergestellt wird.

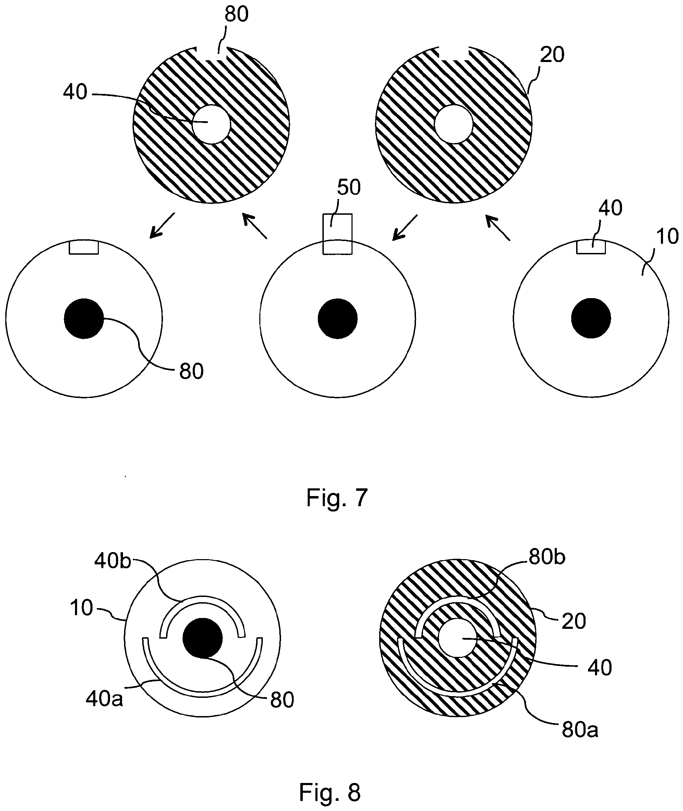

In Fig. 7 ist ein weiteres Ausführungsbeispiel für Batterieelektroden gemäß der vorliegenden Erfindung gezeigt. Die in Fig. 7 dargestellten Anoden 10 weisen eine runde Aussparung 80 in ihrer Mitte auf, während die Kathoden 20 in ihrer Mitte einen entsprechenden Ableiterbereich 40 aufweisen. Der Ableiterbereich 40 der Anoden 10 ist an ihrem Umfangsrand ausgebildet, so dass die Kathoden 20 an dieser Stelle eine Aussparung 80 aufweisen. Wie zuvor beschrieben, werden die Ableiterbereiche 40 der gleichnamigen Elektroden miteinander verbunden und Anschlussfahnen 50 werden jeweils in den Ableiterbereichen 40 der Anoden 10 und der Kathoden 20 befestigt.

In Fig. 8 ist ein weiteres Beispiel für Batterieelektroden gemäß der vorliegenden Erfindung gezeigt. In diesem Ausführungsbeispiel sind die Ableiterbereiche 40 vollständig vom Beschichtungsfilm 70 umgeben. Hier weist die Anode 10 zwei Ableiterbereiche 40a und 40b auf und die Kathode 20 zwei entsprechende Aussparungen 80a und 80b. In diesem Fall ist an jedem der beiden Ableiterbereiche 40a und 40b der Anode 10 jeweils eine Anschlussfahne 50 angebracht. Das Ausbilden von mehreren Ableiterbereichen 40 auf einer Elektrode kann zu einer verbesserten Spannungsableitung führen und einen Widerstand reduzieren.

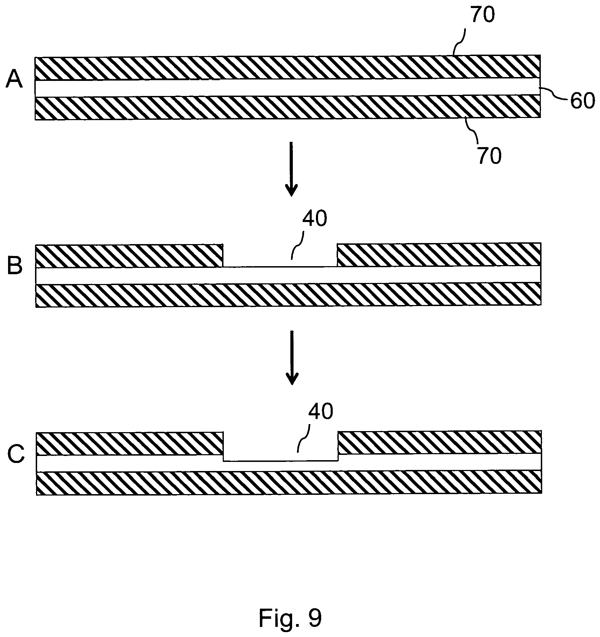

Im Folgenden wird ein beispielhaftes Verfahren zur Herstellung der Batterieelektroden erläutert. Gemäß der vorliegenden Erfindung wird zunächst, wie in Fig. 9A gezeigt, ein Kollektorsubstrat 60 großflächig und beidseitig mit einem Beschichtungsfilm 70 beschichtet. Das Kollektorsubstrat 60 kann allerdings auch nur auf einer Oberfläche großflächig oder im Wesentlichen vollständig beschichtet sein. Der Beschichtungsfilm 70 wird in einem flüssigen Zustand auf das Kollektorsubstrat 60 aufgetragen. Hierbei können einfache, kontinuierliche Beschichtungstechnologien, wie beispielsweise Doctor-blade, Comma-bar oder Kiss-Coating eingesetzt werden. Anschließend wird der Beschichtungsfilm 70 getrocknet oder ausgehärtet, wobei eine Dicke des Beschichtungsfilms 70 im trockenen Zustand beispielsweise in etwa 25µm beträgt. Nach dem Trocknen oder Aushärten des Beschichtungsfilms 70 wird das beschichtete Kollektorsubstrat 60 kalandriert, um den Beschichtungsfilm 70 zu verdichten. Aufgrund der gleichmäßigen Dicke des Kollektorsubstrats 60 ist der Kalandrierprozess vereinfacht und kann effizienter durchgeführt werden, sodass die Qualität des Elektrodenmaterials verbessert ist. Darüber hinaus ist das beschichtete Kollektorsubstrat 60 als Rollenmaterial lagerbar und steht als Elektrodenmaterial für die spätere Weiterverarbeitung zur Verfügung.

Wie in Fig. 9B gezeigt, wird anschließend mindestens ein Ableiterbereich 40 auf dem beschichteten Kollektorsubstrat 60 ausgebildet, indem im Ableiterbereich 40 der Beschichtungsfilm 70 durch Laserablation entfernt und das darunterliegende Kollektorsubstrat 60 freigelegt wird. Dies ist allerdings nur ein Beispiel für einen Herstellungsprozess eines Ableiterbereichs 40. Alternativ kann der Ableiterbereich 40 auch durch Bürsten, Lithographie und andere Verfahren hergestellt werden. Bei einer Laserablation wird Material von der Oberfläche durch Beschuss mit Laserstrahlung abgetragen. Hierfür wird beispielsweise gepulste Laserstrahlung mit hoher Leistungsdichte verwendet. Da die Wärmeleitung nur einen sehr langsamen Energietransport in das Volumen ermöglicht, wird die eingestrahlte Energie auf eine sehr dünne Schicht an der Oberfläche konzentriert. Dadurch wird die Oberfläche stark erhitzt und es kommt zum schlagartigen Verdampfen oder Schmelzen des Materials. Um eine ausreichende Absorption des Laserlichts zu gewährleisten, wird eine Wellenlänge der Laserstrahlung in Abhängigkeit des abzutragenden Materials gewählt. Vorzugsweise wird ein Gravur- oder Schneidlasersystem verwendet, beispielsweise mit einem Ytterbium-Faserlaser bei einer Wellenlänge von 1070 nm. Es können allerdings auch andere Gas-, Festkörper- oder Faserlaser eingesetzt werden. Während der Laser-Verarbeitungsprozesse kann außerdem ein Prozessgas oder Blasgas auf die Oberfläche geleitet werden, um das abgetragene Material aus der Schnittfuge zu treiben oder unerwünschte chemische Reaktionen an der Oberfläche zu verhindern. Vorzugsweise ist das Prozessgas kalt, um das Elektrodenmaterial während der Laserbearbeitung zu kühlen. Durch das Verdampfen oder Schmelzen des Materials werden keine schädlichen Verunreinigungen erzeugt.

Da die Ableiterbereiche 40 durch Laserablation hergestellt werden, können beliebige Ableiterbereichformen und -anordnungen ausgebildet werden. Insbesondere können die Ableiterbereiche 40 so auf der Elektrodenfläche angeordnet werden, dass sie nicht von der Batterieelektrode vorstehen. Dadurch kann ein Energiedichte/Volumen-Verhältnis erhöht und die Größe einer Batterie bei gleichen elektrischen Eigenschaften verringert werden. Das Ausbilden des Ableiterbereichs 40 erfolgt vorzugsweise unmittelbar vor dem Verbinden von gleichnamigen Elektroden oder dem Anbringen einer Anschlussfahne 50 in den Ableiterbereichen 40. Beispielsweise können übereinanderliegende gleichnamige Elektroden durch einen Schweißkontakt in den Ableiterbereichen 40 miteinander verbunden werden. Hierbei kann gleichzeitig eine Anschlussfahne 50 an einem der Ableiterbereiche 40 befestigt werden. Da die Ableiterbereiche 40 erst kurz vor der Weiterverarbeitung des Elektrodenmaterials ausgebildet werden, steht für die Kontaktierung der gleichnamigen Elektroden untereinander bzw. für das Anbringen der Anschlussfahne 50 eine frische saubere Oberfläche zur Verfügung. Dadurch können Passivierungsschichten wie beispielsweise oxidierte Oberflächen und andere Verunreinigungen im Ableiterbereich 40 vermieden werden.

Möglicherweise wird nicht nur der Beschichtungsfilm 70 im Ableiterbereich 40 mittels Laser entfernt, sondern wie in Fig. 9C gezeigt, auch eine dünne Schicht des Kollektorsubstrats 60. Durch die Verwendung von Lasersystemen mit hoher Schnittpräzision kann die Eindringtiefe des Lasers exakt gesteuert werden, sodass die Tiefe des Materialabtrags beliebig gewählt werden kann. Daher kann ein Kollektorsubstrat 60 im Ableiterbereich 40 gezielt verdünnt werden. Außerdem kann dadurch die Oberflächenbeschaffenheit für eine elektrische Kontaktierung verbessert werden.

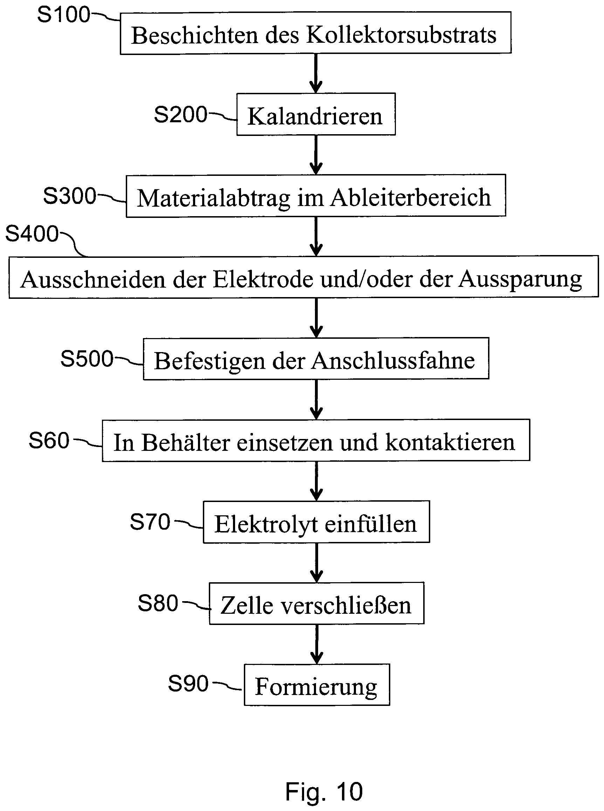

Fig. 10 ist ein Ablaufdiagramm eines Herstellungsprozesses einer Batterie gemäß der vorliegenden Erfindung. Zuerst wird auf einem Kollektorsubstrat 60, das aus einem ungefähr 8-20 µm dicken Metallband besteht, ein tintenartiger Beschichtungsfilm 70 großflächig oder nahezu vollständig aufgetragen (S100). Nach dem Trocknen oder Aushärten des Beschichtungsfilms 70, der im trockenen Zustand ungefähr 25 µm dick ist, wird das gleichmäßig beschichtete Kollektorsubstrat 60 kalandriert (S200), um beim Trocknen entstandene Hohlräume und Unregelmäßigkeiten aus dem Beschichtungsfilm 70 zu entfernen. Das kalandrierte und beschichtete Kollektorsubstrat 60 kann nun als Rollenmaterial bis zur Weiterverarbeitung gelagert werden. Zur Fertigstellung der Batterieelektrode wird der Beschichtungsfilm 70 in einem vorgegebenen Ableiterbereich 40 auf dem beschichteten Kollektorsubstrat 60 durch Laserablation entfernt (S300). Möglicherweise wird zusätzlich eine dünne Schicht des Kollektorsubstrats 60 im Ableiterbereich 40 abgetragen, um eine Oberflächenqualität für elektrische Kontaktierung zu verbessern. Im nächsten Schritt S400 wird dann die Elektrode und gegebenenfalls die Aussparungen 80 in einer gewünschten Form aus dem beschichteten Kollektorsubstrat 60 ausgeschnitten. Vorzugsweise wird die Elektrode bzw. die Aussparung 80 mit Laser ausgeschnitten, alternativ kann aber auch eine Stanzvorrichtung verwendet werden. Die Reihenfolge der Schritte S400 und S300 kann auch vertauscht werden. Danach werden Anoden 10 und Kathoden 20 abwechselnd übereinander so angeordnet, dass sich jeweils die Ableiterbereiche 40 von gleichnamigen Elektroden gegenüberliegen, wobei zwischen den Ableiterbereichen 40 der Anoden 10 die Aussparungen 80 der Kathoden 20 und umgekehrt angeordnet sind. Anschließend werden jeweils die Ableiterbereiche 40 von gleichnamigen Elektroden beispielsweise durch Ultraschallschweißen miteinander verbunden, wobei jeweils eine Anschlussfahne 50 daran befestigt wird (S500). Altnernativ kann die Anschlussfahne 50 auch vor dem Zusammensetzen der Elektroden jeweils an einer der Kathoden 20 bzw. Anoden 10 angebracht werden.

Die weiteren Schritte entsprechen denen des herkömmlichen Verfahrens zum Herstellen einer Batterie. Die Elektrodenanordnung wird in einen Behälter eingesetzt und die Anschlussfahnen 50 werden mit den äußeren Spannungspolen der Batterie verbunden (S60). Anschließend wird ein Elektrolyt eingefüllt (S70) und die Zelle verschlossen (S80). Abschließend wird eine Formierung (S90) durchgeführt.

Gemäß der vorliegenden Erfindung können die Ableiterbereiche so ausgebildet werden, dass sie nicht von einem Außenumfang der Batterieelektrode vorstehen, sondern in einen beschichteten Bereich der Batterieelektrode hineinragen. Dadurch kann bei gleicher Batteriegröße eine höhere Kapazität und Energiedichte erreicht werden.

## Patentansprüche

1. Batterieelektrode, umfassend:
ein Kollektorsubstrat (60);
einen kalandrierten Beschichtungsfilm (70), der ein Aktivmaterial enthält, auf dem Kollektorsubstrat (60); und
mindestens einen Ableiterbereich (40) auf dem Kollektorsubstrat (60), in dem das Kollektorsubstrat freiliegt und in dem der Beschichtungsfilm (70) abgetragen ist, wobei der mindestens eine Ableiterbereich (40) in einen beschichteten Bereich des Kollektorsubstrats (60) hineinragt oder innerhalb des beschichteten Bereichs angeordnet ist,
eine Aussparung (80) des beschichteten Kollektorsubstrats (60) an einer Stelle des beschichteten Kollektorsubstrats (60), an der das beschichtete Kollektorsubstrat (60) ausgeschnitten ist, wobei die Position der Aussparung (80) im zusammengesetzten Zustand einem Ableiterbereich (40) einer benachbarten Batterieelektrode mit entgegengesetztem Potential entspricht.

2. Batterieelektrode nach Anspruch 1, wobei ein Umfang des Ableiterbereichs (40) mindestens zu einer Hälfte an den Beschichtungsfilm (70) angrenzt.

3. Batterieelektrode nach Anspruch 1 oder 2, wobei der Ableiterbereich (40) eine rechteckige, dreieckige, kreisförmige oder ringförmige Form oder einen Ausschnitt davon aufweist.

4. Batterieelektrode nach einem der obigen Ansprüche, wobei der Ableiterbereich (40) an seinem Umfang vollständig vom Beschichtungsfilm (70) umgeben ist.

5. Batterieelektrode nach einem der obigen Ansprüche, wobei der Beschichtungsfilm (70) und/oder jeweils mindestens ein Ableiterbereich (40) auf beiden Seiten des Kollektorsubstrats (60) ausgebildet ist.

6. Batterieelektrode nach einem der obigen Ansprüche, wobei der Ableiterbereich (40) durch Laserablation des Beschichtungsfilms (70) hergestellt ist.

7. Batterieelektrode nach einem der obigen Ansprüche, wobei die Batterieelektrode und/oder die Aussparung (80) durch Laserschneiden ausgeschnitten ist.

8. Batterie, die mindestens eine Batterieelektrode nach einem der obigen Ansprüche enthält.

9. Verfahren zum Herstellen einer Batterieelektrode, umfassend:
Ausbilden eines kalandrierten Beschichtungsfilms (70), der ein Aktivmaterial enthält, auf einem Kollektorsubstrat (60);
Ausbilden eines Ableiterbereichs (40) durch Abtragen des Beschichtungsfilms (70) im Ableiterbereich (40), so dass das Kollektorsubstrat (60) im Ableiterbereich (40) freiliegt, wobei der Ableiterbereich (40) in einen beschichteten Bereich des Kollektorsubstrats (60) hineinragt oder innerhalb des beschichteten Bereichs angeordnet ist,
Ausbilden einer Aussparung (80) des beschichteten Kollektorsubstrats (60), an einer Stelle des beschichteten Kollektorsubstrats (60), durch Ausschneiden des beschichteten Kollektorsubstrats (60), wobei die Position der ausgeschnittenen Aussparung (80) des beschichteten Kollektorsubstrats (60) im zusammengesetzten Zustand einem Ableiterbereich (40) einer benachbarten Batterieelektrode mit entgegengesetztem Potential entspricht.

10. Verfahren nach Anspruch 9, wobei ein Umfang des Ableiterbereichs (40) mindestens zu einer Hälfte vom Beschichtungsfilm (70) umgeben ist.

11. Verfahren nach Anspruch 9 oder 10, wobei der Beschichtungsfilm (70) auf einer gesamten Oberfläche und/oder auf beiden Seiten des Kollektorsubstrats (60) und/oder kontinuierlich ausgebildet wird.

12. Verfahren nach einem der Ansprüche 9 bis 11, wobei der Beschichtungsfilm (70) im Ableiterbereich (40) mittels Laserablation entfernt wird.

## Claims

1. Battery electrode, comprising:
a collector substrate (60);
a calendered coating film (70), which contains an active material, on the collector substrate (60); and
at least one conductor region (40) on the collector substrate (60), in which the collector substrate is exposed and in which the coating film (70) is removed, wherein the at least one conductor region (40) protrudes into a coated region of the collector substrate (60) or is arranged within the coated region,
a recessed area (80) of the coated collector substrate (60) at a point in the coated collector substrate (60) at which the coated collector substrate (60) is extracted, wherein the position of the recessed area (80) in the assembled condition corresponds to a conductor region (40) of an adjacent battery electrode with opposite potential.

2. Battery electrode according to Claim 1, wherein at least one half of the circumference of the conductor region (40) adjoins the coating film (70).

3. Battery electrode according to Claim 1 or 2, wherein the conductor region (40) has a rectangular, triangular, circular or annular shape or a section thereof.

4. Battery electrode according to one of the preceding claims, wherein along its circumference the conductor region (40) is completely surrounded by the coating film (70).

5. Battery electrode according to one of the preceding claims, wherein the coating film (70) and/or at least one conductor region (40) is formed on both sides of the collector substrate (60).

6. Battery electrode according to one of the preceding claims, wherein the conductor region (40) is produced by laser ablation of the coating film (70).

7. Battery electrode according to one of the preceding claims, wherein the battery electrode and/or the recessed area (80) is extracted by laser cutting.

8. Battery containing at least one battery electrode according to one of the preceding claims.

9. Method for producing a battery electrode, comprising:
forming a calendered coating film (70), which contains an active material, on a collector substrate (60);
forming a conductor region (40) by removal of the coating film (70) in the conductor region (40), so that the collector substrate (60) in the conductor region (40) is exposed, wherein the conductor region (40) protrudes into a coated region of the collector substrate (60) or is arranged within the coated region,
forming a recessed area (80) of the coated collector substrate (60) at a point in the coated collector substrate (60) by cutting out the coated collector substrate (60), wherein the position of the extracted recessed area (80) of the coated collector substrate (60) in the assembled condition corresponds to a conductor region (40) of an adjacent battery electrode with opposite potential.

10. Method according to Claim 9, wherein at least one half of the circumference of the conductor region (40) is surrounded by the coating film (70).

11. Method according to Claim 9 or 10, wherein the coating film (70) is formed on an entire surface and/or on both sides of the collector substrate (60) and/or continuously.

12. Method according to one of Claims 9 to 11, wherein the coating film (70) in the conductor region (40) is removed by laser ablation.

## Revendications

1. Électrode de batterie, comprenant :
un substrat collecteur (60) ;
un film de revêtement (70) calandré, qui contient une matière active sur le substrat collecteur (60) ; et
au moins une zone de dérivation (40) sur le substrat collecteur (60), dans laquelle le substrat collecteur est à nu et dans laquelle le film de revêtement (70) est enlevé, l'au moins une zone de dérivation (40) saillant à l'intérieur d'une zone revêtue du substrat collecteur (60) ou étant placée à l'intérieur de la zone revêtue,
une encoche (80) du substrat collecteur (60) revêtu, sur un endroit du substrat collecteur (60) revêtu sur lequel le substrat collecteur (60) revêtu est découpé, dans l'état assemblé, la position de l'encoche (80) correspondant à une zone de dérivation (40) d'une électrode de batterie voisine à potentiel opposé.

2. Électrode de batterie selon la revendication 1, une périphérie de la zone de dérivation (40) jouxtant au moins une moitié du film de revêtement (70).

3. Électrode de batterie selon la revendication 1 ou 2, la zone de dérivation (40) présentant une forme rectangulaire, triangulaire, circulaire ou annulaire ou comportant un extrait de celle-ci.

4. Électrode de batterie selon l'une quelconque des revendications précédentes, sur sa périphérie, la zone de dérivation (40) étant totalement entourée par le film de revêtement (70).

5. Électrode de batterie selon l'une quelconque des revendications précédentes, le film de revêtement (70) et/ou chaque fois au moins une zone de dérivation (40) étant conçu(e)s sur les deux faces du substrat collecteur (60).

6. Électrode de batterie selon l'une quelconque des revendications précédentes, la zone de dérivation (40) étant créée par ablation au laser du film de revêtement (70).

7. Électrode de batterie selon l'une quelconque des revendications précédentes, l'électrode de batterie et/ou l'encoche (80) étant découpées par découpe au laser.

8. Batterie, laquelle contient au moins une électrode de batterie selon l'une quelconque des revendications précédentes.

9. Procédé, destiné à fabriquer une électrode de batterie, comprenant les étapes consistant à :
créer sur un substrat collecteur (60) un film de revêtement (70) calandré, lequel contient une matière active ;
créer une zone de dérivation (40) par enlèvement du film de revêtement (70) dans la zone de dérivation (40), de sorte que le substrat collecteur (60) soit à nu dans la zone de dérivation (40), la zone de dérivation (40) saillant à l'intérieur d'une zone revêtue du substrat collecteur (60) ou étant placée à l'intérieur de la zone revêtue ;
créer une encoche (80) du substrat collecteur (60) revêtu sur un endroit du substrat collecteur (60) revêtu, par découpe du substrat collecteur (60) revêtu, à l'état assemblé, la position de l'encoche (80) découpée du substrat collecteur (60) revêtu correspondant à une zone de dérivation (40) d'une électrode de batterie voisine à potentiel opposé.

10. Procédé selon la revendication 9, une périphérie de la zone de dérivation (40) étant entourée au moins à raison d'une moitié par le film de revêtement (70).

11. Procédé selon la revendication 9 ou 10, le film de revêtement (70) étant conçu sur une surface totale et/ou sur les deux faces du substrat collecteur (60) et/ou étant conçu en continu.

12. Procédé selon l'une quelconque des revendications 9 à 11, le film de revêtement (70) étant retiré dans la zone de dérivation (40) par ablation au laser.
